# EUROPEAN PATENT SPECIFICATION

(11) **EP 0 505 339 B1**
(45) Date of publication and mention of the grant of the patent: **12.06.1996**
(21) Application number: 92830138.1
(22) Date of filing: 20.03.1992
(51) Int. Cl.: C01G 55/00

(54) **Process of preparing rhodium nitrate solution**
Verfahren zur Herstellung einer Rhodium-Nitrat-Lösung
Procédé de préparation d'une solution de nitrate de rhodium

(30) Priority: 20.03.1991 JP 81873/91
(43) Date of publication of application: 23.09.1992
(73) Proprietor: Tanaka Kikinzoku Kogyo K.K., Chuo-ku Tokyo (JP)
(72) Inventor: Ichiishi, Satoshi c/o Tanaka Kikinzoku Kogyo K.K., Ichikawa-shi, Chiba, (JP); Ito, Hisaki c/o Toyota Motor Corporation, Aichi (JP)
(74) Representative: Pellegri, Alberto

(56) References cited:
- US-A- 4 844 879
- 'GMELINS HANDBUCH DER ANORGANISCHEN CHEMIE' 1938 , VERLAG CHEMIE , BERLIN SYSTEM NR 64, RHODIUM
- ZEITSCHRIFT FUR ELEKTROCHEMIE. vol. 44, no. 5, 1938, WEINHEIM DE pages 296 - 299; G.GRUBE ET AL: 'UBER DAS ELECTROCHEMISCHE VERHALTEN DES RHODIUMS'

## Description

### Background of the Invention

The present invention relates to a process of preparing a solution of rhodium nitrate which is employed as raw material of the other rhodium compounds, as a catalyst and the like.

Platinum group metals have heretofore been employed as various catalysts. Among them, a rhodium catalyst is utilized as a waste gas purifying catalyst because of its characteristics. The catalyst is usually prepared by supporting the rhodium and platinum on an inorganic support as a mixed or alloy catalyst.

While various rhodium compounds and their solutions are employed as raw material of the rhodium catalyst, a rhodium nitrate solution is utilized more frequently than the other material because the other elements than the rhodium contained in the rhodium solution do not remain after reduction or sintering to produce harmful influence to the support and the rhodium catalyst is excellent in catalyst performance.

The rhodium nitrate solution is useful also as raw material for synthesis of the other rhodium compounds.

As disclosed in US-A-4,844,879, a method has been proposed for preparing the rhodium nitrate solution which comprises dissolving rhodium black into concentrated sulfuric acid under heating, controlling pH of the solution to produce the precipitate of rhodium hydroxide and dissolving the rhodium hydroxide into nitric acid. The respective reactions before the preparation of the rhodium hydroxide, that is, the reactions consisting of adding the sulfuric acid to the rhodium black under heating and of converting the dissolved rhodium black into the rhodium hydroxide in the alkali solution sufficiently proceed so that impurities are seldom contained in the produced rhodium hydroxide and the rhodium nitrate solution prepared therefrom seldom contains any substance which is liable to precipitate. Accordingly, the characteristics of the method reside in that no precipitate may be generated even if the rhodium nitrate solution is heated or stored for a long period of time.

However, this rhodium nitrate solution prepared according to the above conventional method has a drawback that when an inorganic support is impregnated with the above solution to prepare the rhodium-supported catalyst, the efficiency of supporting is low with scattered values of the supporting so that the above method is inferior from the standpoint of economy.

### Summary of the Invention

An object of the present invention is to provide a process of preparing a rhodium nitrate solution for overcoming the above drawbacks.

Another object of the present invention is to provide a process of preparing a rhodium nitrate solution with the elevated efficiency of supporting the rhodium nitrate on an organic support.

The present invention is a process of preparing a rhodium nitrate solution which comprises reacting rhodium hydroxide with nitric acid characterized in that the mixed solution of the rhodium hydroxide and the nitric acid is concentrated under heating.

It can be assumed that the conversion of the compounds conjecturally formed at an initial stage of the reaction into the desired rhodium nitrate is accelerated to prepare the rhodium nitrate solution with high purity by the above concentration under heating and thereby the supporting efficiency of the rhodium nitrate to the inorganic support can be improved to about 99%.

The molar ratio of the nitric acid and the rhodium hydroxide is desirably so adjusted that the molar amount of the nitric acid is 3 to 5 times that of the rhodium, and thereby the reaction can go to completion with the minimum amount of the nitric acid.

The heating temperature of the concentration is preferably from 70 to 100°C, and thereby the reaction is allowed to proceed slowly so that the sufficient reaction time is provided to complete the reaction while depressing the evaporation volume of the nitric acid per unit time to a slight amount.

The concentration under heating is desirably conducted until the solution volume becomes 3/4 to 1/4 of the initial volume, and thereby the reaction is allowed to go to completion without inviting abrupt temperature rise and the like.

### Detailed Description of the Invention

The present invention is characterized in that the rhodium hydroxide and the nitric acid are not allowed to be simply reacted but the reaction solution is concentrated when the desired rhodium nitrate solution is prepared by adding the raw rhodium hydroxide to the nitric acid and heating the mixed solution. Especially, the supporting efficiency of the rhodium nitrate solution prepared according to this process to an inorganic support can be largely improved.

Although the rhodium nitrate may be easily dissolved in the nitric acid by means of a neutralyzation reaction in a short period of time at the initial stage of the reaction, the rhodium is considered to exist as other rhodium compounds than the desired rhodium nitrate. Although the reason why the supporting efficiency of the rhodium nitrate solution prepared by means of the condensation is elevated remains uncertain, it can be assumed that the rhodium nitrate solution with high purity is prepared because the conversion of the above other rhodium compounds into the rhodium nitrate is accelerated by the condensation.

The condensation is desirably continued until the solution volume becomes 3/4 to 1/4 of the initial one. The condensation up to beyond 3/4 is insufficient to realize the effect of the condensation while the condensation up to below 1/4 may be likely to result abrupt temperature elevation on the surface of the solution especially on the surface in contact with a vessel to produce an oxide so that such a separation procedure as filtering of the precipitate is unpreferably required or the lowering of the yield is invited.

The rhodium hydroxide which is the raw material of preparing the rhodium nitrate solution of the present invention may be prepared by neutralizing a rhodium chloride solution with an alkali hydroxide and filtering the resulting rhodium hydroxide. Sodium hydroxide and potassium hydroxide may be employed as the alkali hydroxide. The rhodium hydroxide can be effectively produced by adding the alkali hydroxide as its aqueous solution.

The rhodium hydroxide may be also prepared by dissolving rhodium black in sulfuric acid under heating and precipitating the rhodium as the rhodium hydroxide in a neutral or alkaline pH range.

The precipitated rhodium hydroxide is preferably employed after it is sufficiently washed with distilled water or deionized water. The washing may be conducted under heating at 70 to 95 °C for elevating the washing effect.

The molar volume of the nitric acid added to the rhodium hydroxide is desirably 3 to 5 times that of the rhodium. The reason why the molar volume of the nitric acid is 3 to 5 times is that the reaction may not go to completion below 3 times while the unreated nitric acid may exist in quantity resulting in economical disadvantage over 5 times.

The reason why the heating temperature is made to be 70 to 100 °C is that the reaction is allowed to proceed slowly so that the sufficient reaction time is provided to complete the reaction while depressing the evaporation volume of the nitric acid per unit time to a slight amount.

The rhodium hydroxide contained in the rhodium nitrate solution prepared according to the process of the present invention possesses high purity and is especially excellent in supporting efficiency to an inorganic support.

### Examples

Although Examples of preparing a rhodium nitrate solution according to the present invention will be described, these Examples do not intend to limit the present invention.

### Example 1

Rhodium hydroxide was produced by adding a potassium hydroxide solution (4 Normal) to a rhodium chloride solution to neutralize pH to 8.0. The precipitate of the rhodium hydroxide was filtered and sufficiently washed with heated distilled water at 90 °C. The rhodium hydroxide (containing 30 g of rhodium) was added to 250 milliliters of nitric acid of which concentration was adjusted to 282 g/liter and was dissolved therein. The solution was heated in a water bath of 95 °C until the solution volume was concentrated to about 1/3 of the initial volume.

The solution volume after the concentration was measured to be 83 milliliters.

After a honeycomb member onto which alumina made of cordierite had been coated and which was employed as an inorganic support was impregnated with the rhodium nitrate solution prepared above and was stirred for one hour, it was observed that 99 % of the rhodium was supported on the inorganic support as a result of analysis of the rhodium concentration of the solution.

### Example 2

The rhodium hydroxide prepared according to the same procedures as those of Example 1 (containing 30 g of rhodium) was added to 300 milliliters of nitric acid of which concentration was adjusted to 282 g/liter and was dissolved therein. The solution was heated in a water bath of 95 °C until the solution volume was concentrated to about 1/3 of the initial volume.

The solution volume after the concentration was measured to be 98 milliliters.

When the rhodium was supported on the honeycomb member onto which alumina made of cordierite had been coated employing the above concentrated solution according to the same procedures as those of Example 1, it was observed that 99 % of the rhodium in the solution was supported on the inorganic support.

### Comparative Example

After a precipitate of rhodium hydroxide was produced by adding potassium hydroxide to a rhodium chloride solution, the precipitate was filtered and sufficiently washed with distilled water. The rhodium hydroxide (containing 30 g of rhodium) was added to 227 milliliters of nitric acid of which concentration was adjusted to 423 g/liter and was dissolved therein without concentration.

When the rhodium was supported on the honeycomb member onto which alumina made of cordierite had been coated employing the above unconcentrated solution according to the same procedures as those of Example 1, it was observed that 75 % of the rhodium in the solution was supported on the inorganic support.

## Claims

1. A process of preparing a rhodium nitrate solution by reacting rhodium hydroxide with nitric acid, characterized in that the reaction is conducted while concentrating under heating a solution of rhodium hydroxide and nitric acid.

2. The process of claim 1, wherein the molar amount of the nitric acid in said solution is 3 to 5 times that of the rhodium.

3. The process of claim 1, wherein the concentration is conducted at a temperature comprised between 70 and 100°C.

4. The process of claim 1, wherein concentration by heating is conducted until the solution volume becomes 3/4 to 1/4 of the initial volume.

## Patentansprüche

1. Verfahren zur Herstellung einer Rhodiumnitratlösung durch Umsetzung von Rhodiumhydroxid mit Salpetersäure, dadurch gekennzeichnet, daß die Umsetzung unter Heizung durch Aufkonzentrierung einer Rhodiumhydroxid- und Salpetersäurelösung durchgeführt wird.

2. Verfahren nach Anspruch 1, wobei die Molmenge der Salpetersäure in der genannten Lösung 3- bis 5-mal wie diejenige des Rhodiums beträgt.

3. Verfahren nach Anspruch 1, wobei die Aufkonzentrierung bei einer Temperatur zwischen 70 und 100°C durchgeführt wird.

4. Verfahren nach Anspruch 1, wobei die Aufkonzentrierung durch Heizung solange durchgeführt wird, bis das Volumen der Lösung 3/4 bis 1/4 des Ausgangsvolumens beträgt.

## Revendications

1. Procédé de préparation d'une solution de nitrate de rhodium en faisant réagir de l'hydroxyde de rhodium avec de l'acide nitrique, caractérisé en ce que la réaction est effectuée en concentrant par chauffage une solution d' hydroxyde de rhodium et d'acide nitrique.

2. Procédé selon la revendication 1, dans lequel la proportion molaire d'acide nitrique dans la solution est de 3 à 5 fois celle du rhodium.

3. Procédé selon la revendication 1, dans lequel la concentration est réalisée à une température comprise entre 70 et 100°C.

4. Procédé selon la revendication 1, dans lequel la concentration par chauffage est réalisée jusqu'à ce que le volume de la solution passe à une valeur comprise entre 3/4 et 1/4 du volume initial.
